# EUROPÄISCHE PATENTANMELDUNG

(11) **EP 2 002 982 A1**
(43) Veröffentlichungstag der Anmeldung: **17.12.2008**
(21) Anmeldenummer: 08008735.6
(22) Anmeldetag: 09.05.2008
(51) Int. Cl.: B41J 2/21, B01L 3/02

(54) **Verfahren und System zur Dosierung und zum Aufbringen einer Reagenzflüssigkeit**

(30) Priorität: 15.05.2007 DE 102007023014
(71) Anmelder: KBA-METRONIC AG, 97209 Veitshöchheim (DE)
(72) Erfinder: Otte, Frank, 97080 Würzburg (DE)
(74) Vertreter: COHAUSZ DAWIDOWICZ HANNIG & SOZIEN

(57) **Zusammenfassung**

Die Erfindung betrifft ein Verfahren und eine Vorrichtung zur Dosierung und zum Aufbringen von Reagenzflüssigkeit aus einem Dosierkopf auf eine Oberfläche, bei denen in dem Dosierkopf (2), der alle flüssigkeitsführenden Komponenten umfasst, die Reagenzflüssigkeit (30a) kontinuierlich in einem Kreislauf umgepumpt wird und in dem Kreislauf die Reagenzflüssigkeit aus einem Vorratsbehälter (30b) in eine Düsenkammer (5) gepumpt wird, welche wenigstens eine Düse (6) aufweist, wobei in der Düsenkammer (5) mittels eines Modulationselements (7) Druckschwankungen erzeugt werden, so dass die Reagenzflüssigkeit als modulierter kontinuierlicher Strahl (9) aus einer Düse (6) austritt, in einzelne Tropfen (11) aufbricht und so als Einzeltropfen (11) über einen Abstand zwischen Dosierkopf (2) und Oberfläche auf die Oberfläche aufgebracht wird.

## Beschreibung

Die Erfindung betrifft ein Verfahren sowie eine Vorrichtung zur Dosierung und zum Aufbringen von Reagenzflüssigkeit aus einem Dosierkopf auf eine Oberfläche.

Dosiersysteme bzw. Dosierköpfe zum Dosieren von Flüssigkeiten sind für medizinische oder pharmazeutische Anwendungen aber auch für industrielle Anwendungen seit langem in Verwendung.

So existieren unterschiedliche Ausführungen, welche als manuell betätigte Hand-Dosierer beispielsweise für medizinische Untersuchungen im Labor eingesetzt werden, wobei in eine Anzahl von Proben jeweils eine bestimmte Menge an Reagenzflüssigkeit eingebracht werden muss. Bei einer größeren Anzahl von Proben werden hierzu auch zusätzlich halbautomatische oder automatische Handhabungssysteme verwendet, in welche eine bestimmte Anzahl von Hand-Dosierern gleichzeitig eingespannt sind und in welchen die Hand-Dosierer gleichzeitig und gleichartig betätigt werden, um so eine größere Anzahl von Proben mit einer Reagenzflüssigkeit zu versehen.

Aufgabe der Dosiereinrichtung selbst ist es dabei bei jeder Betätigung des Auslösemechanismus stets eine gleiche Menge an Reagenzflüssigkeit abzugeben, wobei die Menge in der Regel durch eine äußere Einstellung an der Dosiereinrichtung einstellbar ist.

Beim Einsatz von Dosiereinrichtungen in industriellen Produktionsanlagen sind solche auch automatisch arbeitenden Einrichtungen unzweckmäßig, da zum einen die Anzahl der pro Sekunde erzeugbaren Dosiermengen nur gering ist und zum anderen die Einstellung jeder Dosiereinrichtung zur Abgabe einer jeweils gleichen Menge an Reagenzflüssigkeit aufwendig und ungenau ist.

All diesen Dosiereinrichtungen ist weiterhin gemeinsam, dass die Erzeugung der Dosiermenge nach dem Drop-On-Demand Prinzip erfolgt, indem beispielsweise zu einem bestimmten Zeitpunkt für eine bestimmte Zeit ein Ventil geöffnet wird, so dass eine unter einem Vordruck an diesem Ventil anliegende Reagenzflüssigkeit durch das Ventil und eine nachgeschaltete Austrittsöffnung fließen kann oder indem beispielsweise die sich hinter einer Düse in einer Düsenkammer befindliche Reagenzflüssigkeit mittels eines Druckelementes wie beispielsweise eines Piezoelementes so mit einem Überdruck beaufschlagt wird, dass ein Tropfen mit einer bestimmte Menge an Reagenzflüssigkeit aus der Düse austritt.

Nachteilig an dieser Art der Erzeugung einer bestimmten Flüssigkeitsmenge ist, dass als Reagenzflüssigkeit ausschließlich Flüssigkeiten verwendet werden können, die einen niedrigen Dampfdruck aufweisen und daher nur langsam verdampfen, da ansonsten ein Eintrocknen der sich im Düsenbereich befindlichen Flüssigkeit erfolgt, wodurch entweder die Düse verstopft wird oder sich insbesondere bei einem Flüssigkeitsgemisch die Konzentrationsverhältnisse in diesen Volumenanteil ändern.

Insbesondere der letztgenannte Fall kann damit auch eine Änderung der Reaktionseigenschaften in der Probe bewirken, wenn neben einem Verdampfen einer Trägerflüssigkeit auch ein Verdampfen zumindest eines Teils der eigentlichen aktiven Reagenzien erfolgt.

Darüber hinaus ist die eingesetzte Drop-On-Demand Tropfenerzeugung ungünstig wenn ein Gemisch aus Reagenzflüssigkeiten oder allgemein ein Gemisch aus Flüssigkeiten mit unterschiedlichen Dichten verarbeitet werde soll, wobei dem Flüssigkeitsgemisch beispielsweise zusätzlich Feststoffanteile beigefügt sind. Solche Flüssigkeitsgemische zeigen häufig die Eigenschaft sich zu entmischen oder zu sedimentieren, so dass insbesondere bei einer längeren Verweildauer eines solchen Gemisches in der Dosiereinrichtung eine gleiche Zusammensetzung der auf die jeweiligen Proben aufgebrachten Tropfen nicht gewährleistet werden kann.

Aufgabe der Erfindung ist es, eine Dosiereinrichtung zu schaffen, welche die genannten Nachteile vermeidet und darüber hinaus die Möglichkeit schafft, unterschiedliche, insbesondere auch flüchtige Lösungsmittel enthaltende Reagenzflüssigkeiten zu verarbeiten, weitgehend unabhängig von deren rheologischen Eigenschaften. Aufgabe der Erfindung ist es weiterhin, ein Dosiersystem zu schaffen mit welchem es möglich ist, mit geringsten Mengen von Reagenzflüssigkeit zu arbeiten. Aufgabe der Erfindung ist es weiterhin, einen einfachen und schnellen Wechsel zwischen unterschiedlichen Reagenzflüssigkeiten zu ermöglichen.

Erfindungsgemäß wird diese Aufgabe in einem Verfahren dadurch gelöst, dass in einem Dosierkopf, der alle flüssigkeitsführenden Komponenten umfasst, die Reagenzflüssigkeit kontinuierlich in einem Kreislauf umgepumpt wird und in dem Kreislauf die Reagenzflüssigkeit aus einem Vorratsbehälter in eine Düsenkammer gepumpt wird, welche wenigstens eine Düse aufweist, wobei in der Düsenkammer mittels eines Modulationselements Druckschwankungen erzeugt werden, so dass die Reagenzflüssigkeit als modulierter kontinuierlicher Strahl aus einer Düse austritt, in einzelne Tropfen aufbricht und so als Einzeltropfen über einen Abstand hinweg zwischen Dosierkopf und Oberfläche auf die Oberfläche aufgebracht wird.

Weiterhin wird die Aufgabe erfindungsgemäß durch eine Dosiereinrichtung mit einem Dosierkopf gelöst, bei der in dem Dosierkopf, der alle flüssigkeitsführenden Komponenten umfasst, die Reagenzflüssigkeit kontinuierlich in einem Kreislauf umpumpbar ist und in dem Kreislauf die Reagenzflüssigkeit aus einem Vorratsbehälter in eine Düsenkammer pumpbar ist, welche wenigstens eine Düse aufweist, wobei in der Düsenkammer mittels eines Modulationselements Druckschwankungen erzeugbar sind, so dass die Reagenzflüssigkeit als modulierter kontinuierlicher Strahl aus einer Düse austritt, in einzelne Tropfen aufbricht und so als Einzeltropfen über einen Abstand hinweg zwischen Dosierkopf und Oberfläche auf die Oberfläche aufbringbar ist.

Eine derartige Dosiereinrichtung, bzw. dieses Verfahren hat den Vorteil, dass die Komponenten des Flüssigkeitssystems alle in einem gemeinsamen Dosierkopf zusammengefasst sind, insbesondere in geeigneter Weise so, dass sich eine kleinstmögliche und kompakte Bauform des Dosierkopfes ergibt.

So kann es erfindungsgemäß vorgesehen sein, die Gesamtmenge an Reagenzflüssigkeit im System auf wenige Milliliter, z.B. 5 bis 50 ml zu beschränken.

Bei dem erfindungsgemäßen Verfahren und der Vorrichtung ist es vorgesehen, dass die Dosiereinrichtung bevorzugt nur mit einer einzigen Düse ggfs. auch mit mehreren Düsen arbeitet, aus welcher ein kontinuierlicher Strom von einzelnen gleichartigen Tropfen der Reagenzflüssigkeit ausgestoßen wird.

Die Tropfenerzeugung erfolgt dabei erfindungsgemäß dadurch, dass die Reagenzflüssigkeit aus einem Vorratsbehälter mit einer kontinuierlich arbeitenden Pumpe in eine Düsenkammer gepumpt wird, welche z.B. an einer Seite wenigstens eine Düse aufweist, durch welche die Reagenzflüssigkeit austreten kann. Dabei kann die Reagenzflüssigkeit gegebenenfalls einen Filter durchströmen, wodurch Verunreinigungen wirksam ausgefiltert werden.

Weiterhin ist an oder in der Düsenkammer ein Modulationselement beispielsweise ein Piezoschwinger angebracht, wodurch der aus der Düse austretende kontinuierliche Strahl der Reagenzflüssigkeit moduliert wird und in einem Abstand nach der Düse, insbesondere kurz nach der Düse in gleichartige Tropfen, insbesondere von jeweils demselben Volumen aufbricht.

Es ist hier weiterhin vorgesehen die Tropfen der Reagenzflüssigkeit mit einer elektrischen Ladung, insbesondere verschiedene Tropfen mit gleicher oder verschiedener elektrischer Ladung zu versehen und in einem nachfolgenden elektrostatischen, insbesondere jedoch zeitlich änderbaren Feld eines Plattenkondensators in ihrer Flugbahn abzulenken, so dass in einem bestimmten Abstand zum Dosierkopf die gewünschte Anzahl von Tropfen auf die Oberfläche auftrifft, auf der die Reagenzflüssigkeit appliziert werden soll.

Hierbei kann es vorgesehen sein, dass Tropfen, welche nicht zur Dosiermenge beitragen sollen mit einer solchen Ladung versehen werden oder ungeladen bleiben, dass sie in eine der Düse gegenüber liegende Auffangöffnung fliegen und in den Vorrat der Reagenzflüssigkeit zurückgepumpt werden. Hierdurch wird die applizierte Reagenzflüssigkeit kontinuierlich umgepumpt, wodurch eine kontinuierliche Durchmischung der Reagenzflüssigkeit gewährleistet ist.

Darüber hinaus ist es mit dieser Methode auch möglich Reagenzflüssigkeiten zu applizieren, welche leicht flüchtige Lösungsmittel enthalten, da zum einen die Düse durch den kontinuierlichen Fluss der Reagenzflüssigkeit nicht verstopfen kann und zum anderen im Kreislauf zusätzliche Einrichtungen vorgesehen sein können, mit welchen der Lösungsmittelanteil in der Reagenzflüssigkeit gemessen werden kann und gegebenenfalls durch Zugabe von Lösungsmittel nachgeregelt werden kann.

Es kann weiterhin erfindungsgemäß vorgesehen sein, einen Vorratsbehälter für Reagenzflüssigkeit bereit zu stellen, welcher in einfacher Weise ausgetauscht werden kann. Bei einem solchen Vorratsbehälter kann es sich z.B. um kommerzielle Laborfläschchen oder kommerzielle Medikamentenfläschchen handeln.

Bevorzugt können solche Vorratsbehälter oder Flaschen ausgewählt werden, die einen durchstechbaren Gummiverschluss aufweisen, wobei die Halterung zur Aufnahme derartiger Vorratsbehälter oder Fläschchen eine oder mehrere entsprechende Einstichnadeln sowie eine entsprechende mechanische Halteeinrichtung aufweisen.

Es ist kann weiterhin erfindungsgemäß vorgesehen sein, den Vorratsbehälter mit Reagenzflüssigkeit gegen einen Vorratsbehälter mit Reinigungsflüssigkeit auszutauschen, um bei einem Wechsel der Reagenzflüssigkeit das System zu reinigen.

Ebenso kann es vorgesehen sein, einen weiteren austauschbaren Behälter zum Auffangen der Reinigungsflüssigkeit nach ihrem Durchlaufen durch das System bereitzustellen.

Als Druckpumpe kann bevorzugt eine pulsationsfreie, selbst ansaugende Pumpe eingesetzt werden. Alle flüssigkeitsführenden Komponenten können weiterhin in einem gemeinsamen Druckkopf zusammengefasst sein, insbesondere um eine geringe Baugröße zu erreichen.

Erfindungsgemäß kann es auch vorgesehen sein, den Druckkopf in wenigstens zwei einzelne gegeneinander drehbare und / oder kippbare Baugruppen zu unterteilen, wobei bestimmte zumindest bestimmte logische Funktionseinheiten in einer Baugruppe zusammengefasst sind.

So können beispielsweise die Aufnahmevorrichtungen für die Vorratsbehälter für Reagenzflüssigkeit oder Reinigungsflüssigkeit und die Auffangbehälter in einer Baugruppe zusammengefasst werden, wodurch es möglich wird, je nach Anwendung in unterschiedliche räumliche Richtungen eine Reagenzflüssigkeit zu applizieren, da der Vorratsbehälter durch ein entsprechendes Drehen und / oder Kippen der Baugruppe stets in eine optimale bzw. zulässige Arbeitsposition gebracht werden kann.

Es kann weiterhin erfindungsgemäß vorgesehen sein, die in dem System befindlichen Filter in einem gemeinsamen Gehäuse zusammenzufassen. Die Filter können dabei mit ihrem gemeinsamen Gehäuse austauschbar ausgestaltet sein.

Beim Betrieb einer erfindungsgemäßen Vorrichtung kann es weiterhin erfindungsgemäß vorgesehen sein, unterschiedliche Mengen der zu applizierende Reagenzflüssigkeit mittels einer unterschiedlichen Anzahl von gleichartigen Einzeltropfen zu erzeugen.

Die Düsenkammer kann weiterhin neben dem Zulauf für die Reagenzflüssigkeit auch einen Ablauf für die Reagenzflüssigkeit aufweisen, wodurch überschüssige Reagenzflüssigkeit zumindest teilweise während eines normalen Betriebes oder während einer Reinigung der Düsenkammer, wie sie vor bei einem Wechsel von Reagenzflüssigkeiten vorgesehen sein kann, wieder zurück in den Vorratsbehälter oder in einen Auffangbehälter gelangt.

Hierzu können unmittelbar an der Düsenkammer jeweils im Zulauf und im Ablauf ein verschließbares Ventil angebracht sein. Weiterhin kann je nach Ausführung nachfolgend ein Umschaltventil im Ablauf vorhanden sein, wodurch der Rückfluss aus der Düsenkammer entweder zurück in den Vorratsbehälter geleitet werden kann oder in einen separaten Auffangbehälter.

Wird die Reagenzflüssigkeit wieder zurück in den Vorratsbehälter geleitet, so wird darüber hinaus eine kontinuierliche Durchmischung der Reagenzflüssigkeit erreicht und damit einer Entmischung von Komponenten der Reagenzflüssigkeit entgegen gewirkt.

Wird der Rückfluss im anderen Fall beispielsweise bei der Verwendung einer Reinigungsflüssigkeit in den Auffangbehälter geleitet, so wird eine effektive Reinigung des Systems erreicht und alle Reste einer sich zuvor im System vorhandenen Reagenzflüssigkeit aus diesem entfernt.

Es kann weiterhin erfindungsgemäß ein Drucksensor in der Zulaufleitung zur Düsenkammer vorgesehen sein, sowie ein Druckausgleichselement, wodurch es möglich ist, über die Druckpumpe, das Druckausgleichselement und den Drucksensor mittels einer entsprechenden elektrischen Steuerung einen Regelkreis zu bilden und dadurch den Druck in der Düsenkammer zu regeln.

Es kann zweckmäßig sein, das Druckausgleichselement ebenfalls als Filterelement auszuführen und damit zusätzlich beispielsweise feinere Verunreinigungen oder Verunreinigungen anderer Art aus der Reagenzflüssigkeit zu entfernen. In diesem Fall kann es zweckmäßig sein, auch diesen Filter mit den anderen sich im System befindlichen Filtern in eine gemeinsam auswechselbare Baugruppe zusammen zu fassen.

Um einzelne Tropfen oder eine bestimmte Anzahl von Tropfen aus dem aus der Düse austretenden Tropfenzug zu extrahieren kann es weiterhin vorgesehen sein, die Tropfen mit einer individuellen elektrischen Ladung zu versehen, indem jedem Tropfen über eine unmittelbar der Düse nachgeschalteten Ladeelektrode mittels Influenz eine Ladungsverschiebung in dem gerade noch nicht vom Strahl abgerissenen Tropfen hervorgerufen wird, welche nach dem Abriss des Tropfen sich als bestimmte Ladungsmenge gegenüber einer äußeren Elektrode zeigt. Z.B. kann der Strahl durch eine Ringelektrode geführt werden oder durch zwei oder mehr Plattenelektroden.

Eine Ablenkung der Flugbahn der Tropfen kann dann dadurch erfolgen, dass die Tropfen anschließend das elektrische Feld eines Plattenkondensators kreuzen, wodurch sie je nach aufgeprägter Ladungsmenge mehr oder weniger von ihrer ursprünglichen Flugbahn abgelenkt werden. Tropfen einer bestimmten Ladungsmenge oder ungeladene Tropfen, welche nicht für eine Applikation vorgesehen sind gelangen dabei in eine dafür vorgesehene Auffangöffnung und werden mittels einer zweiten Pumpe in den Vorratsbehälter zurück gepumpt. Es kann dabei zweckmäßig sein, diesen Rückfluss an Reagenzflüssigkeit ebenfalls durch ein entsprechendes Filter laufen zu lassen, um so von außen eingedrungene

Verunreinigungen wie Staub wirkungsvoll aus der Reagenzflüssigkeit zu entfernen.

Erfindungsgemäß kann es dabei vorgesehen sein, die Menge der applizierten Reagenzflüssigkeit dadurch vorzugeben, dass eine bestimmte Anzahl an Tropfen aus dem aus der Düse austretenden Tropfenzug soweit abgelenkt wird, dass dieser auf die entsprechende Probe gelangt. Es ist hier ausreichend den Tropfen lediglich einen von zwei Ladungszuständen aufzuprägen.

In einer weiteren erfindungsgemäßen Ausführung können den unterschiedlichen Tropfen jeweils unterschiedliche Ladungen aufgeprägt werden, so dass die Tropfen beim Kreuzen des nachfolgenden elektrischen Felds jeweils eine unterschiedliche Ablenkung von ihrer ursprünglichen Flugrichtung erfahren. Hierdurch ist es möglich, gezielt mehrere Proben mit jeweils der gleichen Menge an Reagenzflüssigkeit zu versehen, oder eine oder mehrere Tropfen jeweils mit einem bestimmten Muster an Reagenzflüssigkeit zu versehen.

Erfindungsgemäß werden bevorzugt alle dem Flüssigkeitssystem und der Druckerzeugung zugehörigen Elemente in einem gemeinsamen Dosierkopf zusammengefasst, wobei eine Verbindung zu einem externen Steuergerät ausschließlich elektrische Verbindungen umfasst.

Ausführungsbeispiele der Erfindung sind in den nachfolgenden Figuren dargestellt.
Es zeigen:
- Figur 1:: eine erste erfindungsgemäße Ausführung eines Dosiersystems mit einem auswechselbaren Vorratsbehälter
- Figur 2:: eine zweite erfindungsgemäße Ausführung eines Dosiersystems mit einem Vorratsbehälter und einem Auffangbehälter
- Figur 3:: eine dritte erfindungsgemäße Ausführung eines Dosiersystems mit zwei gegeneinander beweglichen Baugruppen

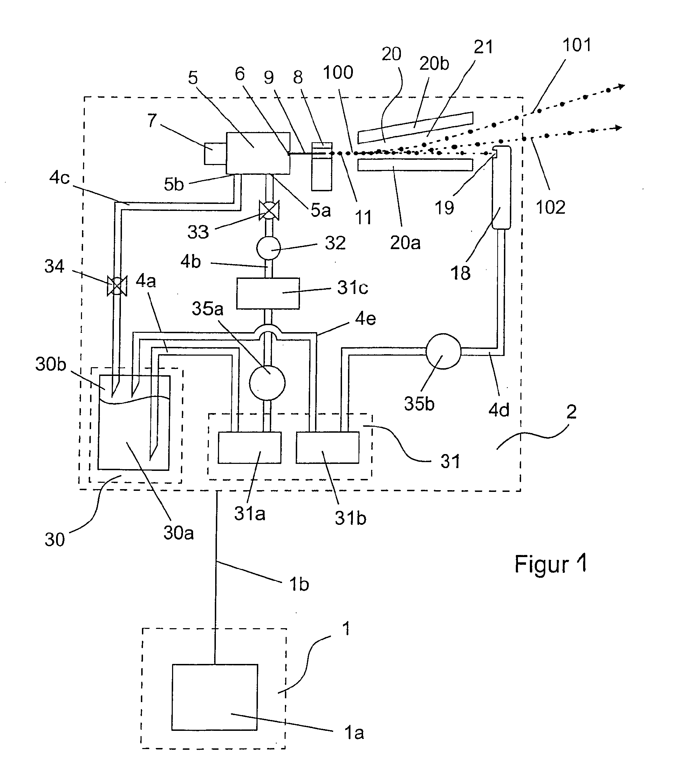

Figur 1 zeigt eine erste erfindungsgemäße Ausführung einer kontinuierlich arbeitenden Dosiereinrichtung. Erfindungsgemäß beinhaltet das vom Dosierkopf 2 abgesetzte Grundgerät 1 lediglich eine elektrische Steuerungseinheit 1a, welche mit dem Dosierkopf 2 über eine Zuleitung 1 b verbunden ist. Sämtliche übrigen für den Betrieb nötigen Komponenten befinden sich erfindungsgemäß in dem Dosierkopf 2.

Die Reagenzflüssigkeit 30a befindet sich in einem austauschbaren Vorratsbehälter 30b, welcher mit einer nicht dargestellten Haltevorrichtung eine erste zumindest logische Baugruppe 30 bildet. Mittels einer Pumpe 35a wird die Reagenzflüssigkeit 30a durch eine Verbindung 4a über ein erstes Filterelement 31a aus dem Vorratsbehälter 30b herausgepumpt und gelangt über eine Verbindung 4b, das Druckausgleichselement 31c, den Drucksensor 32 und das im normalen Betrieb geöffnete Ventil 33 über den Zulauf 5a in die Düsenkammer 5. Die Pumpe 35a, das Druckausgleichselement 31c und der Drucksensor 32 bilden dabei mit der sich im Grundgerät 1 befindlichen elektronischen Steuerung 1a einen Regelkreis, wodurch der Druck in der Düsenkammer 5 eingestellt und geregelt werden kann, je nach Anforderung durch die zu applizierende Reagenzflüssigkeit. Es kann dabei zweckmäßig sein, überschüssige Reagenzflüssigkeit über den an der Düsenkammer 5 angebrachten Ablauf 5b und einen Rücklauf 4c zurück in den Vorratsbehälter zu leiten. Bevorzugt befindet sich in dem Rücklauf 4c hierzu ein Ventil 34, welches je nach Erfordernis geöffnet oder geschlossen werden kann.

Über eine an der Düsenkammer 5 angebrachte Modulationseinrichtung 7 wird der Druck in der Düsenkammer 5 moduliert, so dass der aus der Düse 6 austretende Flüssigkeitsstrahl 9 in kurzer Entfernung nach seinem Austritt in einzelne Tropfen 11 von im Wesentlichen gleicher Größe aufbricht. Kurz vor dem Aufbrechen werden die einzelnen Tropfen 11 über eine Ladeelektrode 8 mit einer individuellen elektrischen Ladung versehen. Entlang ihrer Flugbahn 100 treten die Tropfen 11 nun in ein elektrisches Feld 21 ein, das mittels der Elektroden 20a und 20b des Plattenkondensators 20 gebildet ist. In Abhängigkeit der Ladungsmenge und der Polarität der Ladungen auf den Tropfen 11 sowie der Polarität und Stärke des elektrischen Feldes 21 im Feldraum des Plattenkondensators 20 werden die einzelnen Tropfen 11 in unterschiedliche beispielhaft dargestellte Raumrichtungen 101, 102 abgelenkt.

Die gesamte Anzahl der möglichen Ablenkungswinkel hängt dabei lediglich von der Ansteuerung der Ladeelektrode ab und ist prinzipiell nicht beschränkt. Die einzelnen Platten 20a und 20b des Plattenkondensators 20 können dabei gegeneinander geneigt sein, wie in Figur 1 gezeigt. Es ist aber ohne Beschränkung der Allgemeinheit ebenso möglich, parallel zueinander angeordnete Platten zu verwenden. Die Polarität und Stärke des elektrischen Feldes 21 wird in dieser Ausführung zweckmäßigerweise im Wesentlichen konstant gehalten, da sich eine Änderung auf eine Vielzahl von Tropfen, die sich zu diesem Zeitpunkt im Feldraum des Plattenkondensators befinden, gleichzeitig auswirkt und damit eine Beeinflussung eines einzelnen Tropfens unmöglich ist.

Nach dem Verlassen des Feldraumes 21 des Plattenkondensators 20 wirkt keine elektrostatische Kraft mehr auf die Tropfen 11 und diese behalten ihre neuen Flugbahnen 101, 102 bei. Es ergibt sich so eine fächerförmig angeordnete Schar von Flugbahnen. Tropfen 11, die nicht geladen wurden, da sie beispielsweise für das Applizieren nicht benötigt werden, erfahren in dem elektrostatischen Feld 21 des Plattenkondensators 20 beispielsweise nur eine geringe Ablenkung oder keine Ablenkung und treffen in eine Öffnung 19 eines Fangrohres 18 zur Rückführung der Reagenzflüssigkeit in den Kreislauf. Die so aufgefangene Reagenzflüssigkeit wird über eine Pumpe 35b abgesaugt und gelangt über eine Rückleitung 4d auf ein nachfolgendes Filterelement 31 b und wird anschließend über eine Rückleitung 4e wieder in den Vorratsbehälter 30b zurück geleitet.

Erfindungsgemäß sind die im Druckkopf 2 vorhandenen Filterelemente 31 a und 31 b und je nach Ausführung auch das Druckausgleichselement 31c zu einer gemeinsamen Baugruppe 31 zusammen gefasst, welche über eine nicht dargestellte Schnellwechselvorrichtung in einfacher Weise ausgetauscht werden kann.

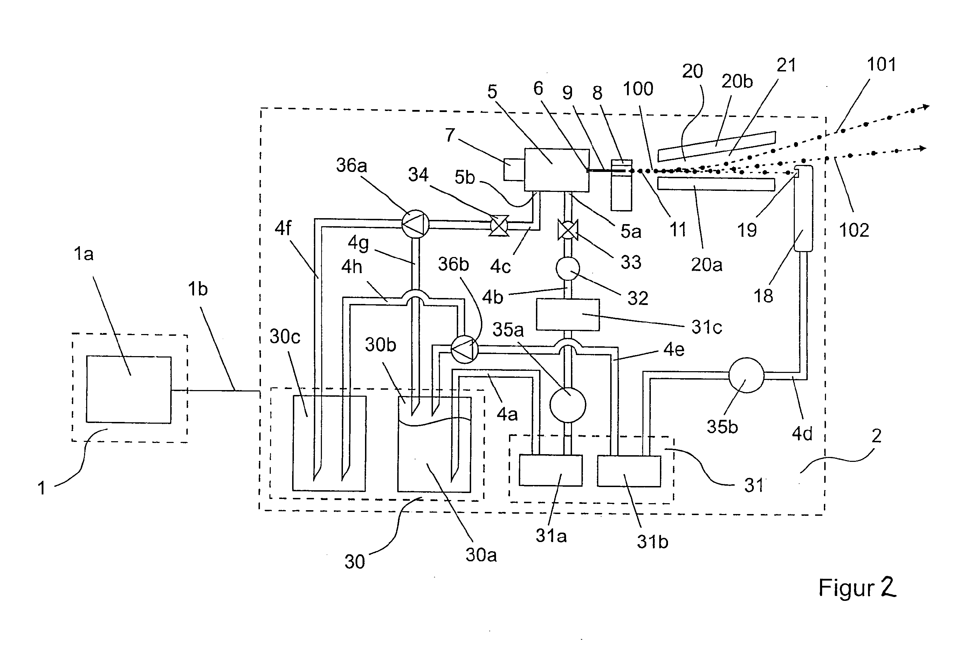

Figur 2 zeigt schematisch eine weitere erfindungsgemäße Ausführung wobei hier ein zusätzlicher Auffangbehälter 30c vorgesehen ist, in welchen der Rücklauf 4c aus der Düsenkammer 5 über ein steuerbares Ventil 34 mittels eines Drei-Wege-Ventils 36a wahlweise entweder in den Vorratsbehälter 30b oder in den dafür vorgesehenen Auffangbehälter 30c geleitet werden kann.

Hierdurch ist es möglich, beispielsweise bei einer Reinigung des Systems den mit einer Reagenzflüssigkeit gefüllten Vorratsbehälter 30b gegen einen mit einer Reinigungsflüssigkeit gefüllten Vorratsbehälter 30b auszutauschen und mittels der Pumpen 35a und 35b durch alle Komponenten des Systems zu pumpen, wobei die aus dem Vorratsbehälter entnommene Reinigungsflüssigkeit bei einem Umleiten über die Drei-Wege-Ventile 36a und 36b in den Auffangbehälter stets nur einmal das System durchläuft und somit eine größtmögliche Reinigungswirkung erzielt werden kann. In gleicher Weise weist der Rücklauf 4e daher ein Drei-Wege-Ventil 36b auf, so dass die über das Fangrohr 18 und über die Pumpe 35b geförderte Flüssigkeit wahlweise entweder in den Vorratsbehälter oder in den Auffangbehälter geleitet werden kann.

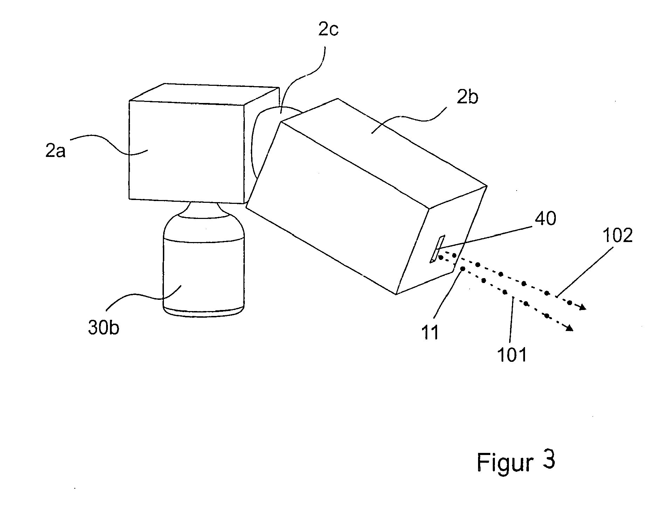

Figur 3 zeigt schematisch die Aufteilung des Dosierkopfes 2 in zwei miteinander beweglich verbundene Baugruppen 2a und 2b. Die Versorgungs-Baugruppe 2a umfasst hierbei beispielsweise die Vorrichtungen zur Aufnahme des Vorratsbehälters 30b und den Vorratsbehälter 30b sowie die Vorrichtungen zur Aufnahme des Auffangbehälters 30c und den Auffangbehälter 30c, sowie beispielsweise weitere Elemente des Flüssigkeitssystems wie die Umschaltventile 36a und 36b.

Bevorzugt umfasst die Versorgungs-Baugruppe 2a alle Komponenten des Flüssigkeitssystems, deren räumliche Lage entscheidend für ihre Funktionalität ist, wie beispielsweise der Vorratsbehälter und / oder der Auffangbehälter, welche beispielsweise bei einer horizontalen Ausrichtung keinen zuverlässigen Betrieb des gesamten Systems ermöglichen.

Die Erzeugungs-Baugruppe 2b umfasst dann die übrigen Bauelemente zur Erzeugung des Drucks und der Flüssigkeitstropfen. Dadurch, das die Baugruppen 2a und 2b miteinander über eine drehbare und / oder kippbare mechanische Verbindung 2c miteinander verbunden sind ist es möglich, unterschiedliche räumliche Applikationsrichtungen zu realisieren, indem die Versorguiigs-Baugruppe 2a räumlich so ausgerichtet wird, dass ein zuverlässiger Betrieb der Dosiereinrichtung ermöglicht wird. Figur 3 zeigt hierbei eine mögliche Lage der Baugruppen 2a und 2b zueinander, wodurch eine Applikation von Dosierflüssigkeit mit einzelnen Tropfen 11, welche aus einer Austrittsöffnung 40 aus der Erzeugungsbaugruppe 2b austreten, unter einer schrägen Auftreffrichtung möglich ist.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Dosiereinrichtung zur Dosierung und zum Auftragen von Reagenzflüssigkeit aus einem Dosierkopf auf eine Oberfläche einer Probe, wobei der Dosierkopf eine Düsenkammer aufweist, welche wenigstens eine Düse (6) aufweist und in der Düsenkammer (5) mittels eines Modulationselements (7) Druckschwankungen erzeugbar sind, so dass die Reagenzflüssigkeit als modulierter kontinuierlicher Strahl (9) aus einer Düse (6) austritt, in einzelne Tropfen (11) aufbricht und so als Einzeltropfen (11) über einen Abstand zwischen Dosierkopf (2) und Oberfläche auf die Oberfläche aufbringbar ist, **dadurch gekennzeichnet, dass** der Dosierkopf (2) alle flüssigkeitsführenden Komponenten der Dosiereinrichtung umfasst, in dem Dosierkopf die Reagenzflüssigkeit (30a) kontinuierlich in einem Kreislauf umpumpbar ist, wobei in dem Kreislauf die Reagenzflüssigkeit aus einem Vorratsbehälter (30b) in die Düsenkammer (5) pumpbar ist und wobei ein vom Dosierkopf (2) abgesetztes Grundgerät lediglich eine elektrische Steuereinheit (1 a) aufweist, die mit dem Dosierkopf (2) ausschließlich über elektrische Zuleitungen (1 b) verbunden ist.

2. Dosiereinrichtung nach Anspruch 1, **dadurch gekennzeichnet, dass** sie eine erste Elektrodenanordnung (8) umfasst, um die einzelnen Tropfen (11) der Reagenzflüssigkeit (30a) mit einer elektrischen Ladung zu versehen und eine zweite Elektrodenanordnung (20), insbesondere einen Plattenkondensator (20a, 20b), um die geladenen Tropfen (11) der Reagenzflüssigkeit in einem elektrischen Feld (21) abzulenken, so dass Tropfen (11) je nach Ablenkung zu einer Dosierung beitragen oder nicht beitragen.

3. Dosiereinrichtung nach einem der vorherigen Ansprüche, **dadurch gekennzeichnet, dass** sie eine Auffangvorrichtung (18) umfasst, mittels der zu einer Dosierung nicht beitragende Tropfen (11) von Reagenzflüssigkeit (30a) auffangbar und über wenigstens eine Rücklaufleitung (4d) in den Flüssigkeitskreislauf zurückleitbar sind.

4. Dosiereinrichtung nach einem der vorherigen Ansprüche, **dadurch gekennzeichnet, dass** sich innerhalb des Flüssigkeitssystems eine Gesamtmenge an Reagenzflüssigkeit von 5 ml bis 50 ml befindet.

5. Dosiereinrichtung nach einem der vorherigen Ansprüche, **dadurch gekennzeichnet, dass** der Dosierkopf (2) eine Vorrichtung zur Aufnahme wenigstens eines Vorratsbehälters (30b) für Reagenzflüssigkeit (30a) aufweist.

6. Dosiereinrichtung nach einem der vorherigen Ansprüche, **dadurch gekennzeichnet, dass** der Vorratsbehälter (30b) mittels einer Schnellwechselhalterung austauschbar ist

7. Dosiereinrichtung nach einem der vorherigen Ansprüche, **dadurch gekennzeichnet, dass** der Vorratsbehälter (30b) einen durchstechbaren Gummiverschluss aufweist und die Aufnahmevorrichtung wenigstens eine Kanüle zum Durchstechen des Gummiverschlusses aufweist.

8. Dosiereinrichtung nach einem der vorherigen Ansprüche, **dadurch gekennzeichnet, dass** der Vorratsbehälter (30b) eine kommerzielle Medikamentenflasche ist

9. Dosiereinrichtung nach einem der vorherigen Ansprüche, **dadurch gekennzeichnet, dass** der Dosierkopf eine Vorrichtung zur Aufnahme eines Auffangbehälters (30c) aufweist.

10. Dosiereinrichtung nach einem der vorherigen Ansprüche, **dadurch gekennzeichnet, dass** das Flüssigkeitssystem wenigstens ein Filterelement (31 a, 31 b) im Zulauf und / oder im Rücklauf des Flüssigkeitskreislaufs aufweist.

11. Dosiereinrichtung nach einem der vorherigen Ansprüche, **dadurch gekennzeichnet, dass** die wenigstens eine Rücklaufleitung wahlweise mit dem Vorratsbehälter (30b) oder dem Auffangbehälter (30c) verbunden ist.

12. Dosiereinrichtung nach einem der vorherigen Ansprüche, **dadurch gekennzeichnet, dass** die Filterelemente (31 a, 31 b) austauschbar ausgeführt sind.

13. Dosiereinrichtung nach einem der vorherigen Ansprüche , **dadurch gekennzeichnet, dass** die Filterelemente (31 a, 31 b) zu einer gemeinsamen Filterbaugruppe (31) zusammen gefasst sind und die Filterbaugruppe (31) als Ganzes austauschbar ist.

14. Dosiereinrichtung nach einem der vorherigen Ansprüche , **dadurch gekennzeichnet, dass** mit ihr kontinuierlich Tropfen (11) von im wesentlichen gleicher Größe erzeugbar sind und die Applikationsmenge durch die Anzahl der applizierten Tropfen bestimmbar ist

15. Dosiereinrichtung nach einem der vorherigen Ansprüche , **dadurch gekennzeichnet, dass** sie in eine Versorgungs-Baugruppe (2a) und eine Erzeugungs-Baugruppe (2b) unterteilt ist, insbesondere wobei diese Baugruppen dreh- und /oder kippbar miteinander verbunden sind, insbesondere über ein drehbares und / oder kippbares Verbindungselement (2c).

16. Dosiereinrichtung nach Anspruch 15, **dadurch gekennzeichnet, dass** die Vorrichtungen zur Aufnahme des wenigstens einen Vorratsbehälters und/oder der Auffangbehälter und/oder der Vorratsbehälter und der Auffangbehälter zu einer mechanischen Versorgungs-Baugruppe (2a) zusammengefasst sind.

17. Dosiereinrichtung nach einem der vorherigen Ansprüche 15 oder 16, **dadurch gekennzeichnet, dass** die Vorrichtungen zur Erzeugung der Tropfen zu einer mechanischen Erzeugungs-Baugruppe (2c) zusammengefasst sind.
